Europäisches Patentamt

European Patent Office

Office européen des brevets

(19)

(11) Veröffentlichungsnummer: **0 083 391**
A2

(12) **EUROPÄISCHE PATENTANMELDUNG**

(21) Anmeldenummer: 82108530.5

(22) Anmeldetag: 16.09.82

(51) Int. Cl.³: **B 60 C 3/00,** B 60 C 5/00,
B 60 C 17/00

(30) Priorität: **29.09.81 DE 3138582**

(43) Veröffentlichungstag der Anmeldung: **13.07.83
Patentblatt 83/28**

(84) Benannte Vertragsstaaten: **AT BE DE FR GB IT LU NL
SE**

(71) Anmelder: **BAYER AG, Zentralbereich Patente, Marken
und Lizenzen, D-5090 Leverkusen 1, Bayerwerk (DE)**

(72) Erfinder: **Ippen, Jakob, Dr., Schleiermacherstrasse 17,
D-5090 Leverkusen (DE)**
Erfinder: **Stüttgen, Friedel, Albrecht-Dürer-Strasse 94,
D-5024 Pulheim (DE)**

(54) **Reifen für Kraftfahrzeuge.**

(57) Ein im Normalbetrieb mit Druckluft gefüllter Kraftfahrzeugreifen, der durch sein niedriges Höhen/Breiten-Ver-
hältnis, seine flache Laufflächenwölbung und seine relativ
starren und dicken Flanken auch bei Luftverlust die für eine
Welterfahrt erforderliche Stabilität und ausreichende Laufeigenschaften besitzt.

EP 0 083 391 A2

BAYER AKTIENGESELLSCHAFT      5090 Leverkusen, Bayerwerk

Zentralbereich                Kb/bc/c
Patente, Marken und Lizenzen


Reifen für Kraftfahrzeuge
_____


Die Erfindung betrifft einen mit Druckluft gefüllten
Reifen für Kraftfahrzeuge, der aufgrund seiner besonderen Formgebung und der relativ starren Reifenflanken
auch bei Luftverlust noch ausreichende Laufeigenschaften und Stabilität besitzt.

Bei herkömmlichen luftgefüllten Kraftfahrzeugreifen
ist das tragende Element die Karkasse. Dies ist im
Prinzip ein Hohlkörper in Form eines Torus aus vulkanisiertem Kautschuk, der auf Zug beanspruchbare
Verstärkungselemente (Textil- oder Stahlcordfäden)
enthält. Der Hohlkörper ist mit Luft unter Überdruck
gefüllt, seine Seitenwände stehen unter Zugspannungen.
Das Gewicht des Fahrzeugs wirkt dieser Zugspannung
entgegen und hebt sie teilweise auf. Wird ein solcher Reifen undicht und verliert seinen Innendruck,
dann überwiegt die durch das Fahrzeuggewicht erzeugte
Druckspannung. Der Reifen verliert seine Form und wird
beim Abrollen in kürzester Zeit zerstört.

Le A 20 860

Dieser Nachteil wird durch einen Reifen gemäß vorliegender Erfindung überwunden. Der Reifen hat ein niedriges Höhen/Breiten-Verhältnis und die Lauffläche einen solchen Krümmungsradius, daß sie nur flach nach außen gewölbt ist. Die Reifenflanken sind relativ dick und starr ausgebildet und der Felgenkontur angepaßt. Sie sitzen auf der Felge auf und stützen sich außen auf dem Felgenhorn ab.

Gegenstand der Erfindung ist ein Kraftfahrzeugreifen, dadurch gekennzeichnet, daß sein Höhen/Breiten-Verhältnis 0,3-0,5:1, sein Laufflächenradius das 0,9-1,1-fache der Reifenbreite und die Dicke der Reifenflanken in Höhe des Felgenhorns 12-20 % der Reifenbreite beträgt.

Vorzugsweise beträgt das Höhen/Breiten-Verhältnis 0,35-0,45:1 und besonders bevorzugt 0,4:1. Der Laufflächenradius ist vorzugsweise ebenso groß wie die Reifenbreite. Die Dicke der Reifenflanken beträgt vorzugsweise 14-18 % der Reifenbreite.

Die Reifenflanken sind bevorzugt so gestaltet, daß ihre Innenwand radial verläuft und senkrecht auf dem Felgenring steht, ihre Außenwand dagegen vom Felgenhorn schräg zur Reifenschulter hin verläuft und der Reifen im Bereich des Felgenhorns sein größtes Widerstandsmoment besitzt.

Der Reifen wird zweckmäßigerweise auf einer mehrteiligen Felge montiert. Ein fester und starrer Sitz

Le A 20 860

wird zusätzlich durch einen umlaufenden Textilcord- oder Drahtkern im Fuß der Reifenflanken gewährleistet. Über diesem Kern befindet sich in den Reifenschultern außerdem eine umlaufende Nut, die die notwendigen Bewegungen des Reifenoberteils gegenüber den starren Reifenflanken erleichtert.

Die Innenseite des Reifenoberteils verläuft i.a. parallel zum Felgenboden. Durch die Wölbung der Lauffläche nimmt die Dicke des Oberteils von den Schultern zur Mitte hin zu und beträgt im Zenit 40-55, vorzugsweise 45-50 % der gesamten Reifenhöhe. In der Lauffläche befinden sich bis zu vier, vorzugsweise zwei, umlaufende Profilrillen, die ebenso wie die Nut in der Reifenschulter eine Tiefe von 8-12 %, vorzugsweise von 10 % der Reifenhöhe, besitzen. Das Reifenoberteil ist außerdem durch eine umlaufende Einlage aus Stahl- oder Textilcord verstärkt, wodurch auch während des Laufs eine unerwünschte Ausdehnung durch die Fliehkraft im Zenit des Reifens vermieden wird. Durch den Laufflächenradius und die davon bestimmte Wölbung der Lauffläche wird beim erfindungsgemäßen Reifen nicht nur eine gute Druckverteilung im Reifenoberteil zur Reifenschulter hin erreicht sondern auch eine gute Anpassung des unter Druck stehenden Reifens an den Boden. Damit wird während des Laufs der nötige Federungskomfort erzielt, ohne daß sich der Reifen in den starren Flanken wesentlich bewegt.

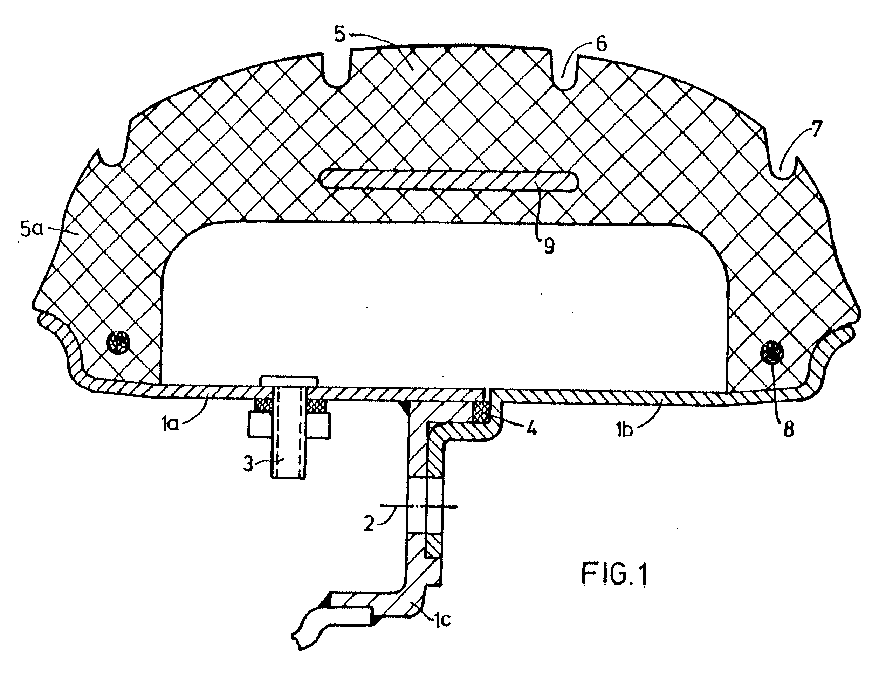

Fig. 1 zeigt einen Querschnitt durch einen aufgepumpten erfindungsgemäßen Reifen, der auf einer mehrteiligen Felge (1a,b,c) montiert ist. Die Felge wird durch 4-6 über den Umfang verteilte Schrauben (2) zusammengehalten und besitzt ein Ventil (3) sowie einen Dichtring (4) an der Trennstelle der Felge. Damit und durch den festen Sitz des Reifens mit Oberteil (5) und Reifenflanken (5a) auf der Felge wird der mit Druckluft gefüllte Hohlraum luftdicht nach außen abgeschlossen. Der Fuß der Reifenflanken ist der Kontur der Felge angepaßt und durch einen umlaufenden Kern (8) verstärkt. Die Innenseite der Flanken verläuft senkrecht, während die Außenseite sich auf dem Felgenhorn abstützt und von dort schräg nach oben zur Reifenschulter verläuft; die eine umlaufende Nut (7) aufweist. Das Reifenoberteil besitzt eine umlaufende Verstärkung (9) und in der Lauffläche die umlaufenden Profilrillen (6). Die Innenseite des Oberteils verläuft annähernd waagerecht, parallel zum Felgenboden.

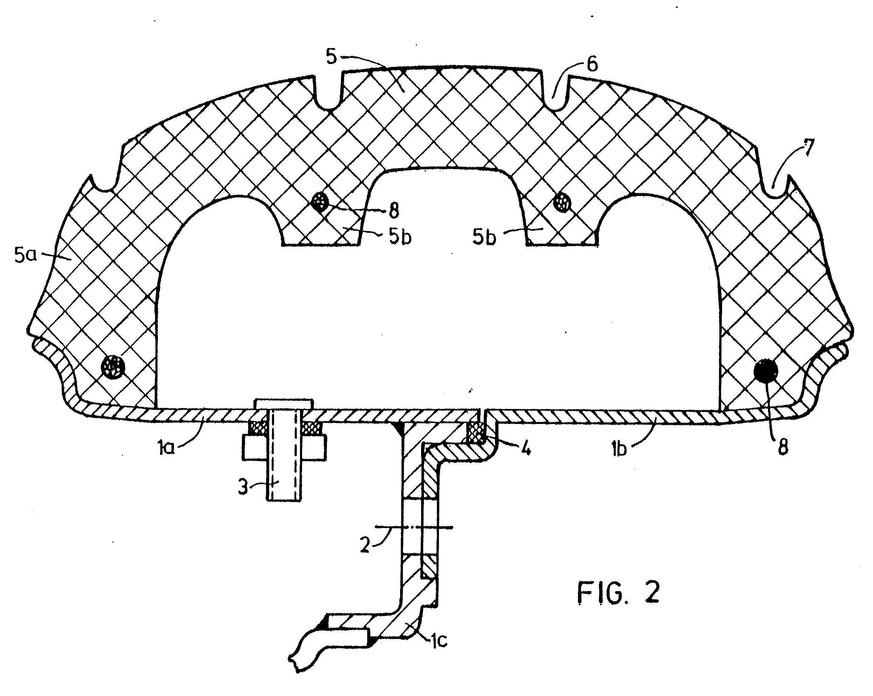

Eine andere Ausführungsform ist in Fig. 2 dargestellt. Hier ist die Innenseite des Oberteils (5) durch Aussparungen unterbrochen, die jeweils bis etwa zur halben Höhe des Oberteils geführt sind. Die Innenseite erhält dadurch die in Fig. 2 dargestellte Kontur mit den umlaufenden Nocken (5b), die unter den Profilrillen (6) angeordnet und ebenso wie die Flanken (5a) durch umlaufende Kerne (8) verstärkt sind. Die übrigen Ziffern in Fig. 2 haben die gleiche Bedeutung wie in Fig. 1.

Le A 20 860

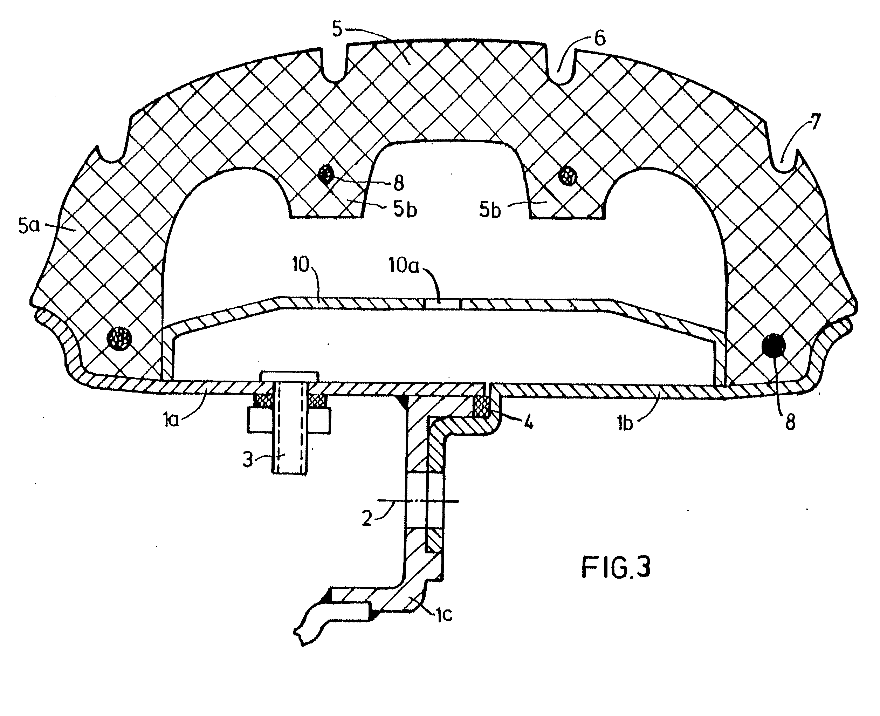

In einer Abwandlung dieser Ausführungsform enthält der Reifen, wie in Fig. 3 dargestellt, zusätzlich einen auf der Felge (1a,b) aufsitzenden umlaufenden Stützring (10) mit mehreren über den Umfang verteilten Löchern (10a) zum Luftdurchlaß. Die Seitenwände des Stützrings liegen fest an der Innenwand der Reifenflanken (5a) an. Der Abstand zwischen Stützring und den Nocken (5b) ist so bemessen, daß im Normalbetrieb die Einfederungsbewegungen des Reifenoberteils (5) nicht beeinträchtigt werden. Der Stützring kann aus jedem dafür geeigneten Material, z.B. aus Kunststoff oder Metall, bestehen.

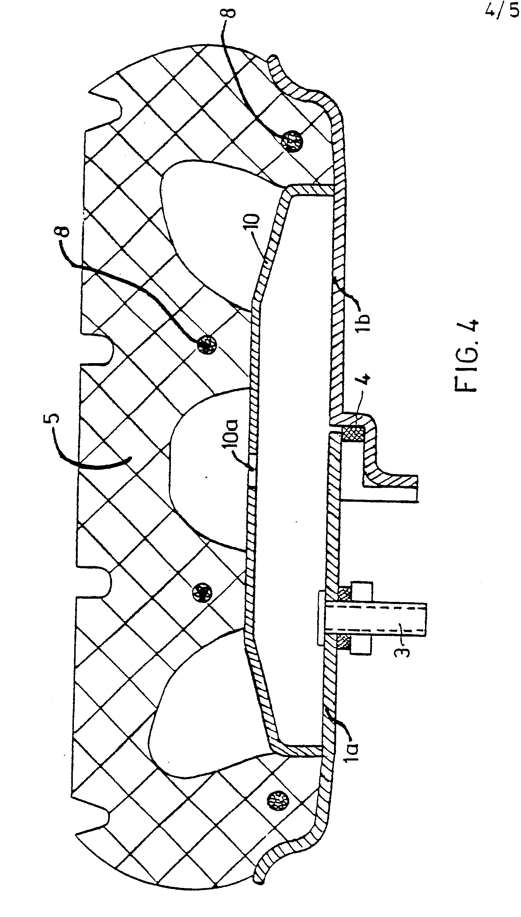

Fig. 4 zeigt einen derartigen Reifen bei Druckverlust. In diesem Fall setzen sich die Stütznocken auf den Stützring (10) auf, so daß die Lauffläche eine praktisch ebene Fläche bildet, während der Reifen sich in den Flanken nicht wesentlich verändert.

Auch bei den in Fig. 1 und 2 gezeigten Ausführungsformen erfährt bei einem Druckverlust lediglich das Reifenoberteil eine entsprechende Formänderung, während die starren Reifenflanken ihre Form im wesentlichen unverändert beibehalten. Durch das niedrige Höhen/Breiten-Verhältnis ist bei einem Druckverlust die Deformation des Reifens insgesamt so gering, daß er noch ausreichende Laufeigenschaften und Stabilität besitzt und auch in Kurven problemlos weitergefahren werden kann.

Le A 20 860

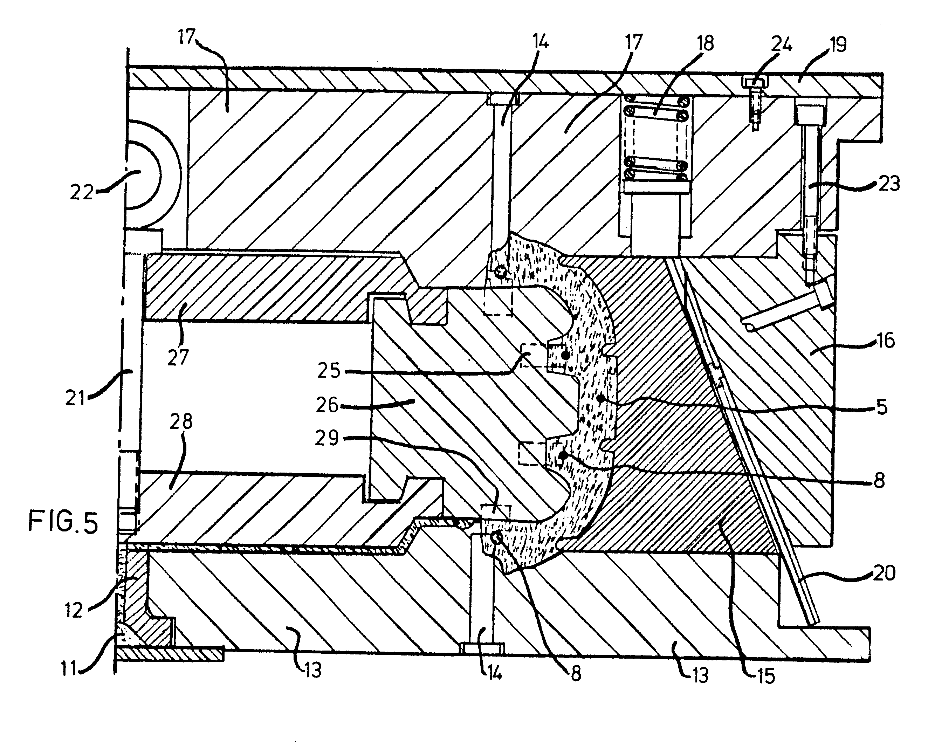

Fig. 5 veranschaulicht die Herstellung des in Fig. 2 bzw. 3 dargestellten Reifens in einer üblichen Spritzpresse, die hier im Schnitt dargestellt ist. Es bedeuten:

(11) Anspritzkanal für den Reifen ( 8) Drahtkerne des Reifens

(14),(29) und (25) Lamellenhalterung für die Drahtkerne

(17) und (19) Formoberteil

(18) Federn

(15) Segmente mit Schrägkonus zum Herausziehen des Formkörpers aus dem Profilgrund,

(16) Hubkörper mit Schwalbenschwanznut, der durch die Befestigung (23) mit dem Formoberteil verbunden ist

(24) Befestigungsteil zwischen den beiden Formoberteilen (17) und (19)

(13) Formunterteile,

(26) segmentierter Formkörper, Teile

(27) und (28) Zentrierflansche für den segmentierten Kern,

(21) Befestigung der Zentrierflansche,

(22) Transporthaken,

(12) Einsetzbüchse für den Anspritzkanal.

Im Formunterteil (13) wird in die Lamellenhalterung (14) der Drahtkern ( 8) eingelegt. Danach werden über den Transporthaken (22) die Innenteile (26,28,27,21) in die Form eingeführt. Auf die Lamellenhalterungen (25) werden vor dem Zusammenbau schon die anderen Drahtkerne (8) aufgebracht. Danach wird auf die obere

Le A 20 860

Lamelle der letzte Drahtkern ( 8) aufgelegt. Im Anschluß hieran bewegen sich, über Kolben betätigt, die Bauteile (17,19,16 und 15) nach unten. Dabei wird über den Kegel (20) das Bauteil (15) soweit nach innen gedrückt, bis die Presse geschlossen ist. Anschließend wird über den Anspritzkanal (11) der Reifen gefüllt. Das Öffnen der Pressen geschieht in umgekehrter Reihenfolge, wobei die Tellerfeder (18) noch die Hubwirkung verstärkt. Nachdem die Profilsegmente (15) über den Keil (20) nach außen zurückgefahren sind und die Presse geöffnet hat, werden wiederum über den Transporthaken (22) der Reifen und die inneren Formteile (21,28,27,26) herausgenommen. An einer zentralen Entformungsstelle wird dann der Reifen freigelegt, während ein zweiter bereits vorher montierter Kern in die Form eingebracht wird und der nächste Reifen in oben beschriebener Reihenfolge hergestellt wird. Die Heizung des Reifens erfolgt je nach verwendeter Kautschukmischung 5 bis 8 Minuten bei Temperaturen von 145-175°C.

Der Reifen muß nicht wie bei herkömmlichen Reifen aus mehreren Lagen unterschiedlichen Materials aufgebaut werden, sondern kann, abgesehen von den umlaufenden Draht- oder Textilverstärkungen, aus einem einheitlichen Kautschuk bzw. Kautschukgemisch hergestellt werden. Geeignet sind alle beliebigen Natur- oder Synthese-Kautschuke, deren Vulkanisate eine Shore-Härte von 55 bis 90 und einen Spannungswert von 100-200 kp/cm$^2$ bei 300 % Dehnung aufweisen. Besonders geeignet sind: Naturkautschuk, Styrol-Butadien-Kautschuk, Polybutadien-Kautschuk und Ethylen-

Le A 20 860

Propylen-Terpolymerisat-Kautschuk.

Nachfolgend seien beispielhaft die Eigenschaften und Hauptbestandteile geeigneter Kautschukmischungen an-gegeben.

1)

| | |
|---|---|
| Naturkautschuk | 25,0 Gew.-Teile |
| Styrol-Butadien-Copolymerisat | 25,0 Gew.-Teile |
| cis-1,4-Polybutadien | 50,0 Gew.-Teile |
| Ruß N-330 | 80,0 Gew.-Teile |
| Mischungsplastizität / 80°C Defo-Härte/Defo-Elastizität | 7700/17 |
| Zugfestigkeit (MPa) | 19,9 |
| Bruchdehnung (%) | 310 |
| Spannungswert bei 300 % Dehnung (MPa) | 19,1 |
| Weiterreißfestigkeit nach Pohle (N) | 160 |
| Härte (Shore A) bei 20°C | 82 |

2)

| | |
|---|---|
| Naturkautschuk | 80,0 Gew.-Teile |
| cis-1,4-Polybutadien | 20,0 Gew.-Teile |
| Ruß N-330 | 55,0 Gew.-Teile |
| Aromatisches Mineralöl | 3,0 Gew.-Teile |
| Mischungsplastizität / 80°C Defo-Härte/Defo-Elastizität | 1100/15 |
| Zugfestigkeit (MPa) | 21,9 |
| Bruchdehnung (%) | 460 |

Le A 20 860

| | |
|---|---|
| Spannungswert bei 300 % Dehnung (MPa) | 13,0 |
| Weiterreißfestigkeit nach Pohle (N) | 370 |
| Härte (Shore A) bei 20°C | 66 |

3)

| | |
|---|---|
| Ölverstrecktes Styrol-Butadien Copolymerisat | 68,5 Gew.-Teile |
| Ölverstrecktes cis-1,4-Polybutadien | 68,5 Gew.-Teile |
| Ruß N-220 | 95,0 Gew.-Teile |
| Aormatisches Mineralöl | 20,0 Gew.-Teile |
| Mischungsplastizität / 80°C Defo-Härte/Defo-Elastizität | 1550/16 |
| Zugfestigkeit (MPa) | 15,5 |
| Bruchdehnung (%) | 410 |
| Spannungswert bei 300 % Dehnung (MPa) | 10,8 |
| Weiterreißfestigkeit nach Pohle (N) | 240 |
| Härte (Shore A) bei 20°C | 66 |

Für die Reifenflanken können jedoch auch spezielle Kautschukmischungen eingesetzt werden, die gegebenenfalls durch einen Zusatz von z.B. modifizierten Novolaken oder Glasfasern verstärkt sind und eine größere Shore-Härte besitzen.

Nachfolgend seien beispielhaft die Eigenschaften und Hauptbestandteile derartiger Kautschukmischungen angegeben:

Le A 20 860

1)

| | |
|---|---|
| Naturkautschuk | 75,0 Gew.-Teile |
| cis-1,4-Polybutadien | 25,0 Gew.-Teile |
| Ruß N 347 | 40,0 Gew.-Teile |
| aktive, gefällte Kieselsäure | 30,0 Gew.-Teile |
| modifizierter Novolak | 30,0 Gew.-Teile |
| Mischungsplastizität / 80°C | |
| Defo-Härte/Defo-Elastizität | 2250/11 |
| Zugfestigkeit (MPa) | 14,1 |
| Bruchdehnung (%) | 270 |
| Spannungswert bei 100 % Dehnung (MPa) | 6,5 |
| Weiterreißfestigkeit nach Pohle (N) | 180 |
| Härte (Shore A) bei 20°C | 89 |

2)

| | |
|---|---|
| Naturkautschuk | 57,0 Gew.-Teile |
| Styrolbutadienkautschuk | 43,0 Gew.-Teile |
| Ruß N 220 | 62,0 Gew.-Teile |
| Ruß N 326 | 30,0 Gew.-Teile |
| Glasfasern | 15,0 Gew.-Teile |
| Mischungselastizität / 80°C Defo-Härte/Defo-Elastizität | 4550/15 |
| Zugfestigkeit (MPa) | 14,3 |
| Bruchdehnung (%) | 110 |
| Spannungswert bei 100 % Dehnung (MPa) | 13,1 |
| Weiterreißfestigkeit nach Pohle (N) | 150 |
| Härte (Shore A) bei 20°C | 93 |

<u>Le A 20 860</u>

3)

| | |
|---|---|
| Naturkautschuk | 75,0 Gew.-Teile |
| cis-1,4-Polybutadien | 25,0 Gew.-Teile |
| Ruß N 347 | 70,0 Gew.-Teile |
| modifizierter Novolak | 30,0 Gew.-Teile |
| Mischungselastizität / 80°C Defo-Härte/Defo-Elastizität | 2550/17 |
| Zugfestigkeit (MPa) | 13,1 |
| Bruchdehnung (%) | 130 |
| Spannungswert bei 100 % Dehnung (MPa) | 9,9 |
| Weiterreißfestigkeit nach Pohle (N) | 160 |
| Härte (Shore A) bei 20°C | 94 |

- 12 -

Patentansprüche

1) . Kraftfahrzeugreifen, dadurch gekennzeichnet, daß
sein Höhen/Breiten-Verhältnis 0,3-0,5:1, sein Laufflächenradius das 0,9-1,1-fache der Reifenbreite
und die Dicke der Reifenflanken in Höhe des Felgenhorns 12-20 % der Reifenbreite beträgt.

2) Reifen nach Anspruch 1, dadurch gekennzeichnet,
daß die Innenwand der Reifenflanken senkrecht
verläuft, die Außenwand dagegen vom Felgenhorn
schräg zur Reifenschulter hin verläuft und der
Reifen im Bereich des Felgenhorns sein größtes
Widerstandsmoment besitzt.

3) Reifen nach Anspruch 1 oder 2, dadurch gekennzeichnet, daß die Innenseite des Reifenoberteils durch
Aussparungen so geformt ist, daß sich unterhalb
der Profilrillen jeweils eine umlaufende Nocke
befindet.

4) Reifen nach Anspruch 3, dadurch gekennzeichnet,
daß sich im Hohlraum des Reifens zusätzlich ein
Stützring befindet, der auf der Felge aufsitzt
und bei einem Druckverlust die umlaufenden Nocken
abstützt.

5) Reifen nach Anspruch 1 bis 4, dadurch gekennzeichnet, daß die Reifenflanken aus einem härteren

Le A 20 860

Kautschuk als das Reifenoberteil bestehen und
gegebenenfalls durch einen Zusatz von modifizierten Novolaken oder Glasfasern verstärkt
sind.

0083391

FIG.1

FIG. 2

FIG.3

0083391

4/5

FIG.4

FIG.5